# EUROPEAN PATENT APPLICATION

(11) **EP 1 513 341 A1**
(43) Date of publication of application: **09.03.2005**
(21) Application number: 04254204.3
(22) Date of filing: 14.07.2004
(51) Int. Cl.: H04N 5/445

(54) **Method of displaying EPG information using mini-map**

(30) Priority: 02.09.2003 KR 2003061088
(71) Applicant: Samsung Electronics Co., Ltd., Suwon-si, Gyeonggi-do 442-742 (KR)
(72) Inventor: Choi, Seung-eok, Seoul (KR); Chung, Sun-wha, c/o 506-504 LG Village 5-cha, Yongin-si, Gyeonggi-do (KR); Myung, In-sik, Incheon (KR); Lee, Jung-bong, Seoul (KR)
(74) Representative: Brandon, Paul Laurence

(57) **Abstract**

A method of classifying programs by features and representing the classified programs corresponding to the classification selected by a user as a program guide using a mini-map (410). The method of displaying EPG information on a screen (400) through a mini-map (410) according to the present invention includes the steps of displaying the mini-map (410) on a portion of the screen (400) of the digital broadcast receiver; selecting a specific item belonging to a specific category among all programs, by a user; displaying a result filtered by the selection on the mini-map (410), and selecting another program though a cursor movement on the mini-map (410).

## Description

Apparatuses and methods consistent with the present invention relates to methods of displaying EPG (Electronic Program Guide) information on a screen, and more particularly, but not exclusively, to a method of classifying programs by features and representing the classified programs corresponding to the classification selected by a user as a program guide using a mini-map.

In general, a television set (TV) comprises a user input device such as a remote control, an audio/video (A/V) processing unit for decoding audio/video information, a data processing unit for separating various channel information from additional information (i.e., service information), a database for storing the separated channel information and a control unit for controlling the operation of TV and the display of EPG.

If the TV receives broadcast signals, a demultiplexing unit separates audio/video information and additional information from the received broadcast signals. Further, the separated audio/video information is input into the AV processing unit, whereas the additional information is input into the data processing unit. The additional information is generally composed of a PAT (Program Association Table), a TDT/TOT (Time Date Table)/(Time Offset Table), an EIT (Event Information Table), and the like. The PAT includes information on a plurality of programs, and the TDT/TOT includes time information of the respective programs. In addition, the EIT includes information such as the title, story, broadcast limiting rate, start/end time, and running time of a program. The processing unit separates EIT information from the additional information and stores the separated EIT information in the database in a prescribed format.

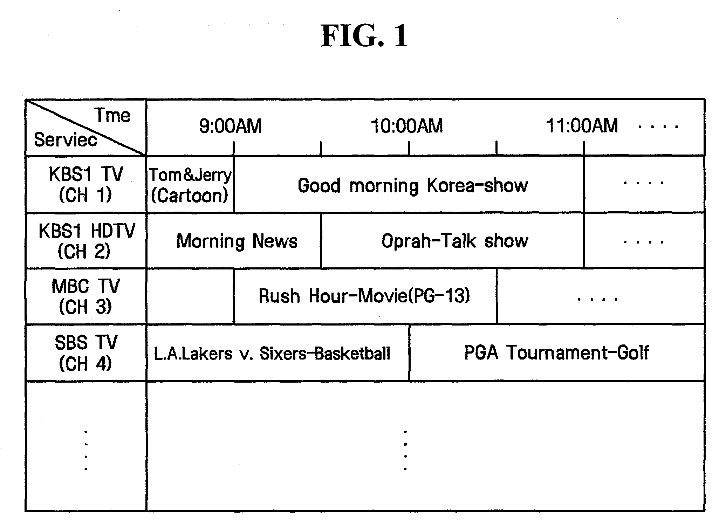

FIG. 1 illustrates an EPG screen displayed on a related art TV. As shown in FIG. 1, EPG shows channels, sequences, and lists of programs allocated by times. When selecting a specific channel on the EPG screen of FIG. 1, a viewer can receive detailed information on the current and pending programs scheduled for a specific channel at a current time.

As shown in FIG. 1, due to the constraints of screen size or resolution for the display unit of a conventional digital TV or set-top box, it is hard to provide all the detailed program information such as the program information commonly published in newspapers. Further, since there are a number of channels and a variety of programs on each channel, it is not easy to find the desired type of program using only the program title. Even though information on the desired program has been obtained, information on a channel including the desired program cannot be easily obtained when the user wishes to move the relevant channel. The reason is that information on the position of a current program is merely provided in character form (i.e., channel number).

Therefore, considerable time and effort are required for the user to recognize and select the desired program according to the related art EPG display method.

Illustrative, non-limiting embodiments of the present invention overcome the above disadvantages and other disadvantages not described above. Also, the present invention is not required to overcome the disadvantages described above, and illustrative, non-limiting embodiment of the present invention may not overcome any of the problems described above. It is an aim of preferred embodiments of the present invention to provide a method of displaying desired EPG information through a mini-map according to categories such as genre, rating and image quality.

It is another aim of preferred embodiments of the present invention to provide a method of allowing a user to easily find the relative position of a current program and intuitively recognize program information through an EPG represented as a mini-map.

It is a further aim of preferred embodiments of the present invention to provide a method of allowing a user to easily select a desired channel using an EPG represented as a mini-map.

According to an aspect of the present invention, there is provided a method of displaying EPG information on a screen of a digital broadcast receiver through a mini-map, comprising (1) displaying the mini-map on a portion of the screen of the digital broadcast receiver; (2) selecting a specific item belonging to a specific category among all programs; and (3) displaying a result filtered by the selection on the mini-map, wherein the mini-map is composed of cells representative of the respective programs which are displayed on a two-dimensional plane having channel and broadcast time axes.

According to another aspect of the present invention, there is provided a digital broadcast receiver for allowing EPG information to be displayed on a screen, comprising: a first unit for displaying a mini-map on a portion of the screen of the digital broadcast receiver, a second unit to select a specific item belonging to a specific category, and a third unit to display a result filtered by the selection on the mini-map, wherein the mini-map is displayed on a two-dimensional plane having channel and broadcast time axes.

Although exemplary embodiments of displaying a mini-map are disclosed for illustrative purposes, those skilled in the art will appreciate that various modifications, additions and substitutions are possible, without departing from the scope and spirit of the invention as set forth in the accompanying claims.

Further features of the present invention are set out in the appended claims.

The present invention will become apparent from the following description of exemplary embodiments, by way of example only, given in conjunction with the accompanying drawings, in which:
FIG. 1 illustrates an EPG screen displayed in a related art television;
FIG. 2 is a block diagram illustrating the configuration of a digital broadcast receiver relevant to an exemplary embodiment of the present invention;
FIG. 3 is a view showing the external shape of a remote control for implementing an exemplary embodiment of the present invention;
FIG. 4A illustrates a mini-map on a portion of a screen in EPG screen mode according to an exemplary embodiment the present invention;

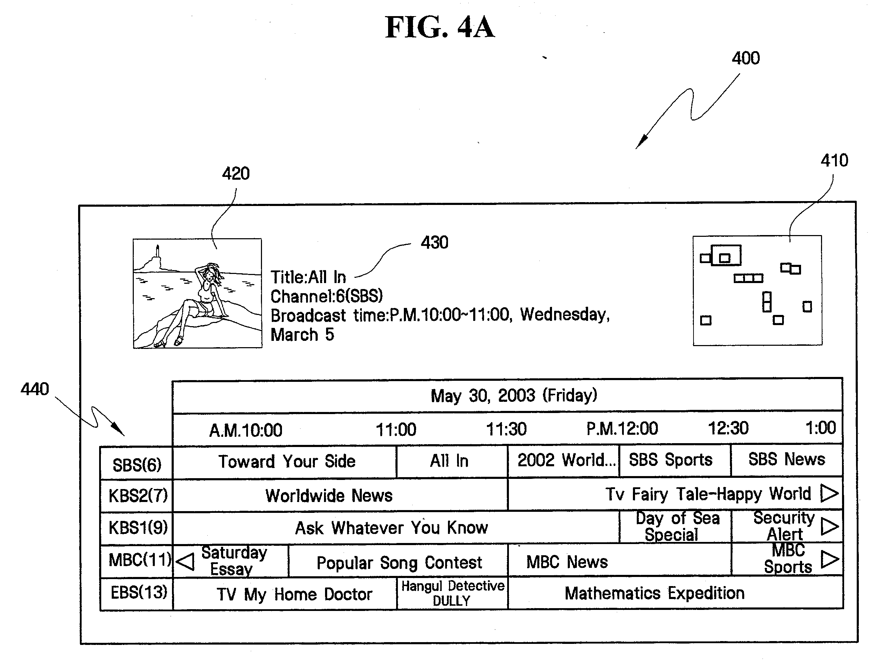

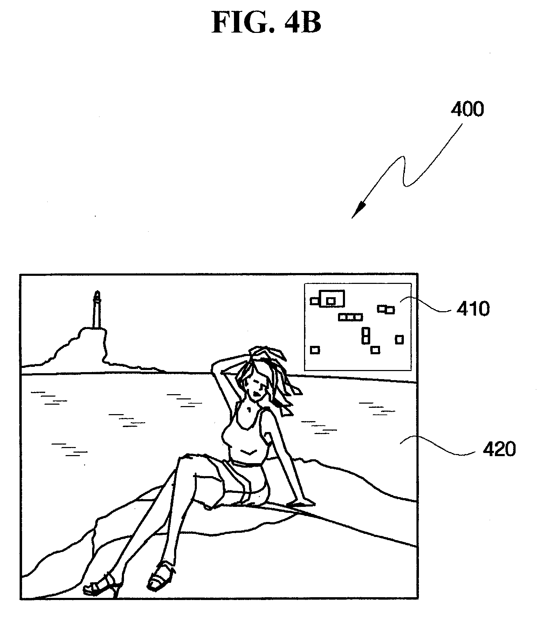

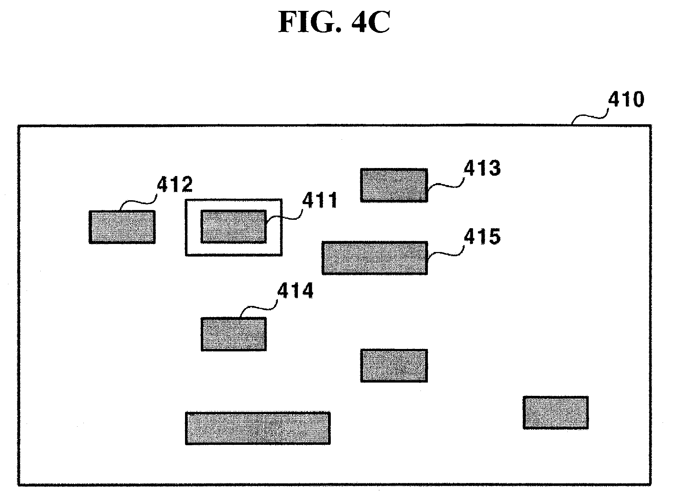

FIG. 4Billustrates a mini-map on a portion of the screen in program broadcast mode according to an exemplary embodiment of the present invention;
FIG. 4C illustrates the process of changing channels using a mini-map;

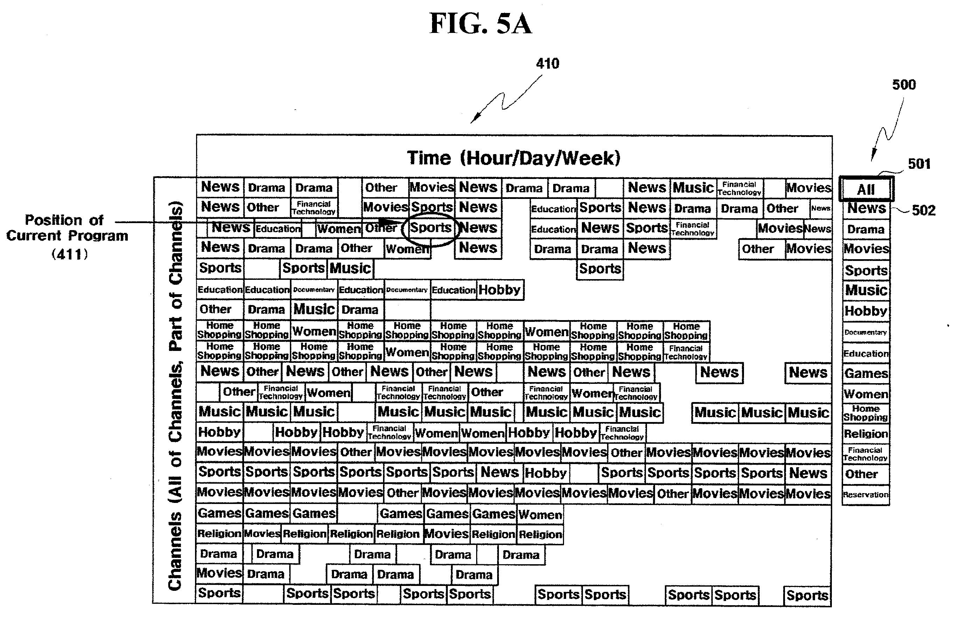

FIG. 5A illustrates a mini-map screen on which all programs are displayed;

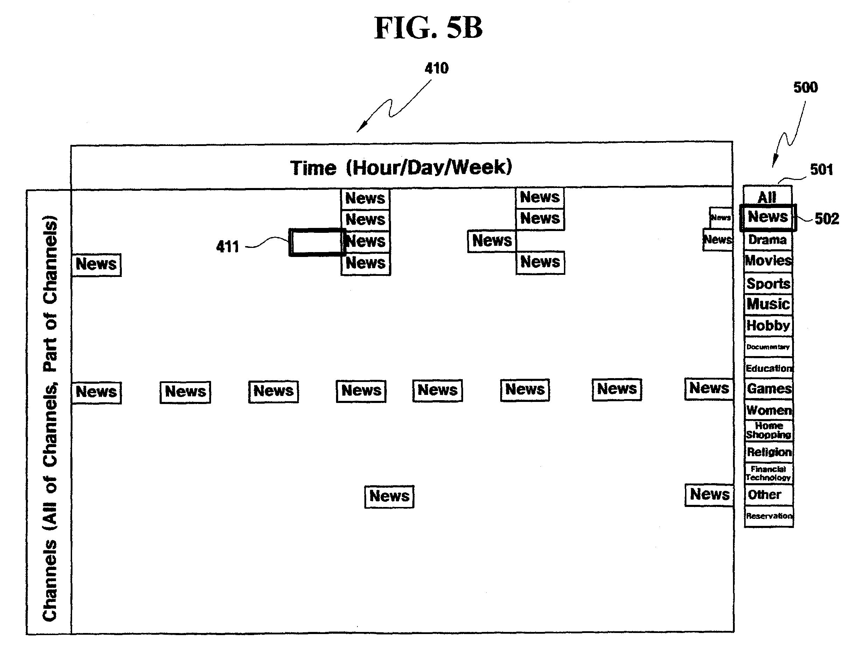

FIG. 5B illustrates a mini-map displayed when a news item in a genre menu is selected;

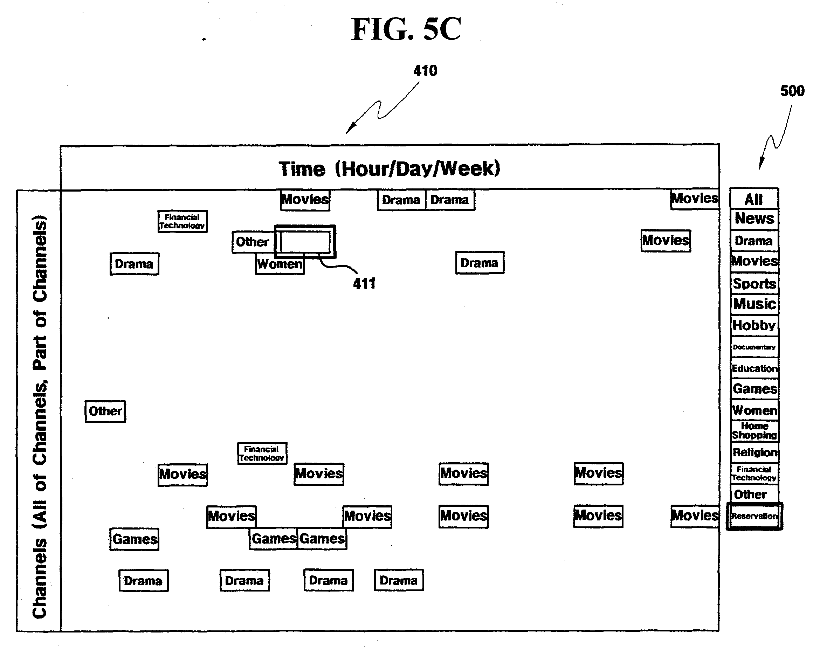

FIG. 5C illustrates a mini-map showing results filtered by applying two or more categories; and

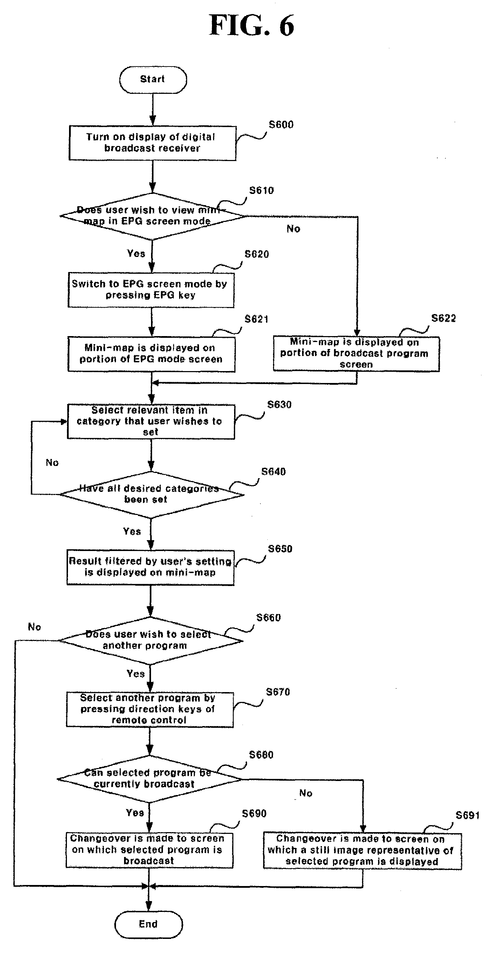

FIG. 6 is a flowchart illustrating an exemplary embodiment of the operation of the present invention.

Hereinafter, illustrative, non-limiting embodiments of the present invention will be described in detail with reference to the accompanying drawings.

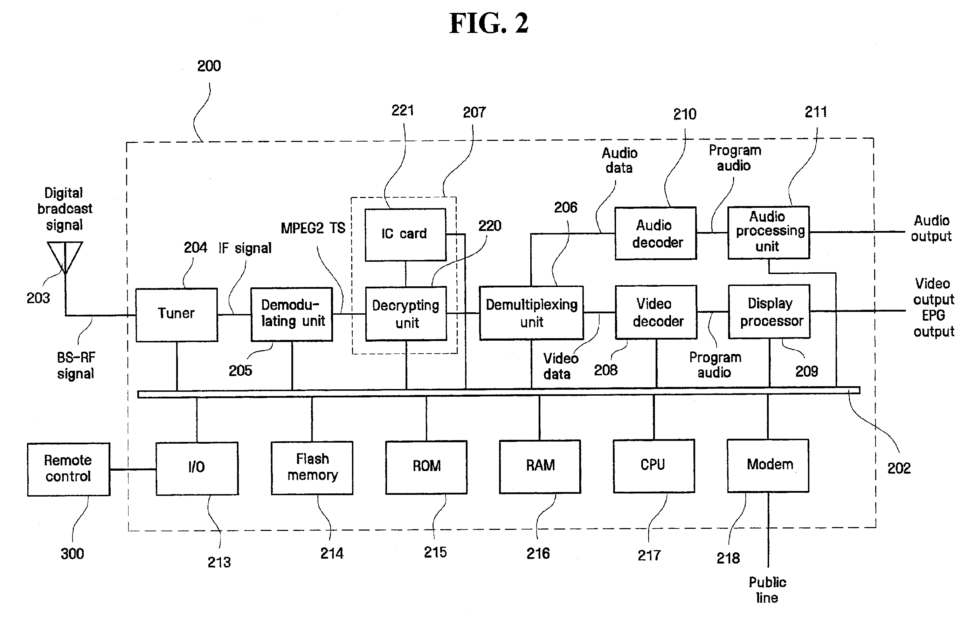

FIG. 2 illustrates the configuration of a digital broadcast receiver 200 relevant to an exemplary embodiment of the present invention. Broadcast signals transmitted over a satellite, territorial wave, cable or the like are received by an antenna 203 and then sent to a tuner 204. These broadcast signals include service information (hereinafter, referred to as "SI") used for the display of an EPG (Electronic Program Guide) in addition to the video and audio information of TV programs (hereinafter, referred to as "TV program information"). The tuner 204 is tuned to a reception band selected by a user, converts received signal waves into IF (Intermediate Frequency) signals, and then sends the converted signals to a demodulating unit 205. The demodulating unit 205 demodulates the input digital signals and transports the demodulated data to a demultiplexing unit 206 in a transport stream (hereinafter, referred to as "TS") format of MPEG2.

The demultiplexing unit 206 extracts audio and video data of a designated service from the input MPEG2 TS and supplies the audio and video data to an audio decoder 210 and a video decoder 208, respectively. Here, the audio data are of the MPEG2-AAC format, whereas the video data are of the MPEG2-Video format. The audio decoder 210 decodes the input audio data and produces program audio data to supply the produced data to an audio processing unit 211. The audio processing unit 211 performs predetermined audio signal processing and then outputs the audio via an amplifier.

Furthermore, the video decoder 208 decodes the video data and produces program video data to supply the produced data to a display processor 209. The display processor 209 performs predetermined video signal processing for the input program video data and produces image output. The display processor 209 also has the function of superimposing character information and the like on the program image displayed on a TV display screen.

In addition, the demultiplexing unit 206 extracts control data including SI from the input MPEG2 TS. The SI is the original format of data for the EPG display, and an EPG display process is performed using the SI. The control data including the SI extracted by the demultiplexing unit 206 are stored in RAM (Random Access Memory) 216 that is under the control of a CPU 217. EPG text data for use in performing the EPG display is also stored in RAM 216. A flash memory 214 stores various kinds of graphic data (e.g., frameworks of program tables, logo marks of broadcast channels and the like) necessary to the EPG display, and ROM (Read Only Memory) 215 stores font data and the like that are used as text data for EPG.

A limited broadcast in the form of pre-contract service is performed in service or program unit and transmitted in the form of the encrypted MPEG2 TS. A limited-reception processing unit 207 is composed of a decrypting unit 220 and an IC card 221 for recording contract information and making viewing decisions. The IC card 221 is distributed to respective receiver users from service centers associated with a broadcaster. User contract information, which may be determined according to the contract between the user and each broadcaster and generally different from the respective users, is written in the card. When a user selects a limited broadcast program, the limited-reception processing unit 207 decrypts MPEG2 TS of a relevant program using decryption-related information obtained from the user contract information and broadcast signals if a contract for the relevant program exists, thereby allowing the user to view the relevant program. On the other hand, if there is no contract, decryption of the MPEG2 TS is not done and thus the user cannot view the limited broadcast program. Further, in the case of a Pay Per View program, purchase conditions for the Pay Per View program are written in the IC card 221 when the user purchases the program, and Pay Per View program purchase information is sent to the broadcaster from a receiver via a modem 218 and a public line at regular intervals.

A command input by the user through a remote control 300 is sent to the CPU 217 via an I/O interface 213 and recognized by the CPU 217. The CPU 217 controls components in the receiver 200 in accordance with the user's command. For example, the CPU sends to the tuner 204 a command for allowing the tuner to be tuned to a frequency of the channel designated by the user.

When the EPG is to be displayed, the CPU 217 produces EPG text data using the SI stored in the RAM 216. Then, the CPU 217 produces EPG display data using graphic data such as the framework data of program tables stored in the flash memory 214, font data in the ROM 215 and the produced EPG text data and supplies them to the display processor 209. The display processor 209 either modifies the EPG display data and the program video data received from the video decoder 208 or superimposes the EPG display data onto the program data to output the superimposed data to a TV display screen (not shown) as video signals.

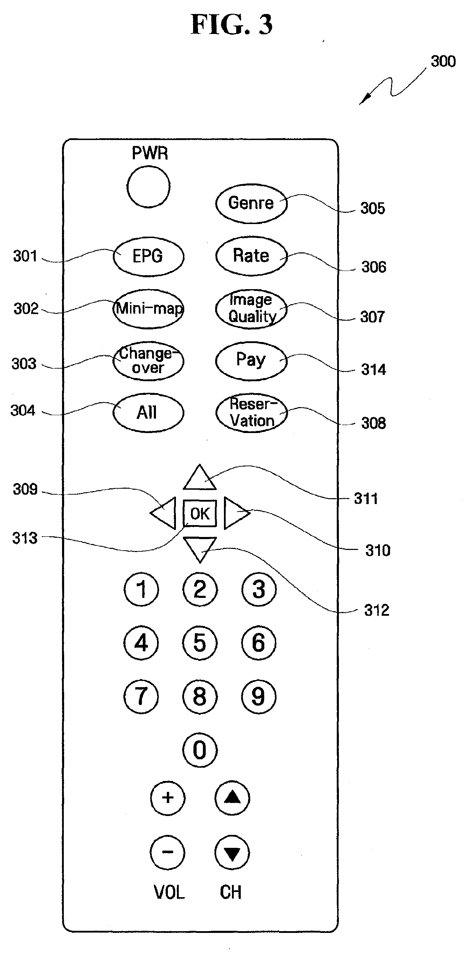

FIG. 3 shows the external shape of a remote control for implementing this embodiment of the present invention. An EPG key 301 is used to switch a program mode into an EPG screen mode when a program is being broadcast (from a program broadcast mode) to display program information onto the full screen, and a mini-map key 302 is used to display a mini-map proposed in the present invention onto a portion of the screen. If the mini-map key 302 is pressed during the execution of a normal EPG screen on which a mini-map does not exist, a screen as shown in FIG. 4A appears. On the other hand, if the mini-map key 302 is pressed while a program is being broadcast, a screen as shown in FIG. 4B appears. A changeover key 303 is used to switch between the EPG screen as shown in FIG. 4Aand the program broadcast screen as shown in FIG. 4B.

A genre key 305 is used to produce a genre menu 500 ( FIGs. 4A-C) on the right side of the mini-map. If the genre menu 500 appears, the user can select a desired genre by pressing an up direction key 311 or a down direction key 312. A rate key 306 is used to produce a rate menu on the right side of the mini-map. An image quality key 307 is also used to produce an image quality menu on the right side of the mini-map. Further, a pay key 314 is used to produce a pay menu on the right side of the mini-map. A method for operating the selection of the rate, image quality and pay keys is the same as that in the genre key 305.

A reservation key 308 is used to show only the programs that are reserved in advance by the user. This key operates in a toggle fashion. That is, only the reserved programs are displayed if the key is pressed once, and all programs are again displayed if the key is pressed again.

An ALL key 304 is used to again display all the programs on the mini-map in a state where some programs have been selected by the genre key 305, the rating key 306, the image quality key 307, the pay key 314, or the reservation key 308. A variety of direction keys 309 to 312 are used to move the cursor. The OK key 313 is used to receive confirmation for the execution of a specific command from the user when the confirmation for the user's selection is needed prior to the command execution.

Meanwhile, the other keys in the remote control 300 are the same as keys necessary for the operation of a general TV. Since they are not related directly to the present invention, the explanation thereof will be omitted herein.

FIG. 4A illustrates a mini-map displayed on a portion of a screen in an EPG screen mode according to an embodiment of the present invention, and FIG. 4B illustrates a mini-map displayed on a portion of a screen in a program broadcast mode. The present embodiment is composed of a method of mapping the EPG information to the mini-map and a method of displaying the EPG information on the mini-map. The method of mapping the EPG information to the mini-map is a scheme of displaying all the EPG information on the mini-map in a categorized or designated format in the same manner as in general PC games. That is, programs are categorized by criteria such as genre, rate and image quality, and only a program belonging to an item selected for each category is filtered and displayed on the mini-map 410. Thus, a figure shown in the mini-map on behalf of each program (in this example, a quadrangle) is defined as a program cell.

Only programs belonging to a desired category among all programs, which can be represented as the EPG, are displayed on the mini-map 410. The position of the program currently viewed by the user appears on the mini-map. The user can intuitively obtain all the desired information using the mini-map. Further, the mini-map acts as a map upon the movement to a desired program or channel, so that it can provide the user with a convenient user environment. It is apparent that positions and sizes occupied by components shown in FIGS. 4A and 4B are not limited to the present embodiment and can be otherwise represented by various methods.

Referring to FIG. 4A, an image 420 of a current program is displayed in a small size on the left top of the full display screen 400, and simple information 430 on the current program is also displayed. Further, the mini-map 410 of the present embodiment is displayed on the right top of the screen. Assuming that the full screen on which all the EPG program information is displayed corresponds to a portion inside the outline of the mini-map, relative positions occupied by the programs belonging to the category selected by the user are displayed on the mini-map 410. In addition, a program cell 411 for indicating the relative position of the current program on the mini-map 410 is represented as a cursor using a special method. Examples of such a special method may include a variety of methods such as a method of creating a flickering effect on the program cell that indicates the current program, a method of displaying the circumference of the program cell as a bold line, and a method of drawing a closed curve around the exterior of the program cell as shown in the figure.

A grid guide 440 for indicating the general EPG information in the same manner as in the related art is displayed on the lower portion of the full display screen 400. Since the grid guide 440 cannot represent all the EPG program information, the titles of programs adjacent to the current program are displayed.

When the user presses the changeover key 303 of the remote control in a state where the screen appears as shown in FIG. 4A, the screen is changed as shown in FIG. 4B. The screen of FIG. 4B may also appear when the user presses the mini-map key 302 while viewing the program. That is, the image 420 of the current program is displayed on the full display screen 400 and the mini-map 410 is displayed at the right top of the screen. Such a configuration can allow the user to intuitively recognize, through the mini-map, at which time and channel a program in a specific category is broadcast, even while viewing a specific program. In such a state, another program belonging to the same category can be easily selected by using the direction keys 309 to 312 of the remote control. The current program can be changed to another program currently being broadcast by moving the cursor from the position of the current program to another position through the up and down direction keys and then pressing the OK key 313.

Assuming that the mini-map 410 is displayed as shown in FIG. 4C, when the cursor is placed at the position of the current program 411, a program 412 is selected by pressing the left direction key and a program 414 is selected by pressing the down direction key. Further, a program 415 positioned near the current program 411 is selected among the programs 413 and 415 by pressing the right direction key at the position of the current program 411. If the distances of the programs 413 and 415 from the current program 411 are the same as each other, any one of the programs may be selected but it can be determined that the program positioned above is selected. In practice, portions represented as blanks on the mini-map are also portions where predetermined programs are present. However, these portions are not selected since they are not programs belonging to the category selected by the user. Thus, it is possible to select a program in a much more effective and intuitive manner as compared to a case where the cursor is moved using the direction keys while all the programs are displayed.

If any program that is being broadcast at the same time is selected through such a selection method, the current screen is switched to a screen of the desired program. However, if a program that cannot be broadcast at this time is selected by moving the cursor in a right or left direction, a still image representative of the desired program other than the video thereof appears at the position.

If all the EPG information is not displayed on the mini-map, a movement of the screen can be made by scrolling. Scrolling means that hidden portions of the screen can be displayed on the mini-map by further moving the cursor beyond the upper, lower, left and right edges of the screen.

FIG. 5A is a mini-map screen on which all programs are displayed. Programs for a day or week may be displayed on the mini-map according to the amount of EPG information available. The respective programs are arranged in two dimensions along the time and channel axes, and are classified by program genres thereof. Since a specific color is assigned to each genre, programs of the same genre are displayed in the same color.

Although it has not been indicated in this example, the program cells representative of programs that have already been broadcast may be displayed in different colors to indicate that the given programs are past programs. For example, all the program cells representative of programs that have been already broadcast may be displayed in gray, so that a program the user wishes to view can be easily selected.

When the genre key 305 on the remote control 300 is pressed, the genre menu 500 is displayed on the right side of the mini-map. If a desired genre is selected on the genre menu, only programs belonging to the selected genre can be displayed on the mini-map 410. Alternatively, if an "All" menu 501 is again selected after the desired genre has been selected, all programs can be displayed on the mini-map 410 as shown in FIG. 5A. When the genre menu 500 appears, a user can select a desired genre by pressing the up or down direction key 311 or 312. For example, if a "news" menu 502 is selected in the genre menu 500 in the state shown in FIG. 5A, the mini-map will be represented as shown in FIG. 5B.

A rate menu can be displayed on the right side of the mini-map by selecting the genre key 305 in the same manner as in the rating key 306. The rate menu can be, for example, classified into "everyone", "over 12 years old", "over 15 years old", "over 19 years old", etc. according to the age of the user.

Further, an image quality menu can be displayed by electing the image quality key 307. For example, the image quality menu can be classified into, "HD class", "SD class", "normal TV class", etc. according to the image quality of the program. In addition, a pay menu can be displayed by selecting the pay key 314. The pay menu may be classified either into "pay" and "free" or according to price ranges. When each of the rates, image quality and pay menus is selected, only the programs that meet the relevant condition are filtered and then displayed on the screen. Furthermore, if the user reserved specific programs in advance, only the reserved programs can be filtered and displayed by merely pressing the reservation key 308. Moreover, although it has not been included in exemplary embodiment, an additional menu classified according to patterns of the broadcast progress, i.e. live broadcasts, recorded broadcasts, reruns and the like, may be added.

FIG. 5C shows an example of a mini-map on which results that the programs are filtered through two or more categories are illustrated. It is also possible to apply two or more categories among the menus of the aforementioned genre, rate, image quality, pay or free, reservation and the like. For example, if a HD-class image quality program for over 15 years old is to be displayed on the mini-map, the user can first display the rate menu by pressing the rate key 306 and then select the "over 15 years old" menu using the up or down direction keys 311 or 312. Subsequently, the user can display the image quality menu by pressing the image quality key 307 and then select the "HD class" menu using the up or down direction keys 311 or 312. Accordingly, the filtered results are displayed on the mini-map as shown in FIG. 5C.

In other words, it is possible to quickly obtain information at which time and channel the programs of the same category are broadcast by confirming the categories to which the current program belongs among the EPG information of all channels. Further, when a channel is to be switched to another desired program, a quick movement can be made since the current position can be easily recognized.

FIG. 6 is a flowchart illustrating the operation of an exemplary embodiment of the present invention.

First, if the user turns on a display unit of a digital broadcast receiver, a screen of the program being broadcast on the current channel appears (S600). That is, it becomes a program broadcast mode as shown in FIG. 4B. Next, when the user wishes to view a mini-map in the program broadcast mode (S610), he/she presses the mini-map key so that the mini-map is displayed on a portion of the screen of the program currently being broadcast (S622). On the other hand, when the user wishes to view the mini-map in an EPG screen mode as shown in FIG. 4A (S610), he/she presses the EPG key so that the program broadcast mode is changed to the EPG screen mode (S620). Then, the mini-map is displayed on a portion of the screen of the EPG screen mode (S621).

Next, the user selects a relevant item in a category that the user wishes to set (S630). Categories are classified according to genre, rate, image quality, pay or free, reservation, pattern of broadcast progress and the like. The selection of the relevant items is performed until the setting of all the desired categories is completed (S640). When the user completely sets all the desired categories, the results filtered according to the setting of the user are displayed on the mini-map (S650). Accordingly, the user can intuitively recognize a position of the current program and relative positions of the other programs displayed on the mini-map.

If the user intends to select a program other than the currently viewed program (S660), he/she can easily select the other program by pressing direction keys of the remote control (S670). If the selected program can be currently broadcast (S680), i.e. if the broadcast time of the selected program is within the current broadcast time zone, a changeover is made to a screen on which the selected program is broadcast (S690). However, if the selected program cannot be currently broadcast (S680), a changeover is made to a screen on which a still image representative of the selected program is displayed (S691).

According to preferred embodiments of the present invention, a user can intuitively recognize EPG information and change channels more easily when he/she wishes to view a desired program.

Further, spatial constraints for a display unit can be overcome, and thus, EPG information can be more efficiently provided.

Furthermore, a user can easily use the EPG by applying a technique used in game or navigation systems to a method of providing EPG information according to preferred embodiments of the present invention. Therefore, the user's appreciation for the product can be enhanced.

Although the embodiments of the present invention have been described with reference to the accompanying drawing, it can be understood by those skilled in the art that the present invention can be implemented in other specific forms without modifying or changing the technical spirit and essential features thereof. Therefore, it should be understood that the aforementioned embodiments are not restrictive but illustrative in all aspects. The scope of the present invention should be defined by the appended claims, and all changes or modifications made from the spirit and scope of the invention and equivalents thereof should be construed as falling within the scope of the invention.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of displaying EPG information on a screen (400) of a digital broadcast receiver through a mini-map (410), comprising:
(1) displaying the mini-map (410) on a portion of the screen (400) of the broadcast receiver;
(2) selecting a specific item belonging to a specific category among all programs; and
(3) displaying a result filtered by the selection on the mini-map (410),
wherein the mini-map (410) is composed of cells (411-415) representative of the respective programs which are displayed on a two-dimensional plane having channel and broadcast time axes.

2. The method as claimed in claim 1, further comprising the step of, prior to step (1), displaying a grid guide and an image of a currently broadcast program at a predetermined position on the screen (400) of the digital broadcast receiver.

3. The method as claimed in claim 1 or claim 2, further comprising the step of (4) selecting another program though a cursor movement on the mini-map (410).

4. The method as claimed in any preceding claim, wherein step (1) comprises the steps of:
when intending to view the mini-map (410) in EPG screen mode, switching to the EPG screen mode by pressing an EPG key (301) of a remote control(300), and displaying the mini-map (410) on a portion of the screen in the EPG screen mode by pressing a mini-map key (302) of the remote control (300); and
when intending to view the mini-map (410) in program broadcast mode, displaying the mini-map (410) on a portion of an image of a currently broadcast program by pressing the mini-map key (302).

5. The method as claimed in any preceding claim, wherein the specific category includes a category according to program genre.

6. The method as claimed in claim 5, wherein the specific category further includes categories according to program rate, image quality, and whether the program has been reserved or not.

7. The method as claimed in claim 3, wherein step (4) comprises the steps of:
selecting another program by pressing direction keys of a remote control (300);
switching to a screen on which the selected program is broadcast, when the selected program is a program that is currently broadcast; and
switching to a screen on which a still image representative of the selected program is displayed, when the selected program is currently broadcast.

8. The method as claimed in any preceding claim, wherein the cells (411-415) representative of the respective programs have different colors for each item in a category according to genre.

9. The method as claimed in any preceding claim, wherein a cell (411-415) representative of a program that has already been broadcast among the cells (411-415) representative of the programs has a separate color for indicating a past program.

10. The method as claimed in any preceding claim, wherein a cell (411-415) corresponding to a currently broadcast program among the cells representative of the respective programs is indicated in a predetermined pattern.

11. The method as claimed in any preceding claim, wherein when all EPG information is not simultaneously displayed on the mini-map (410), all the EPG information can be utilized on the mini-map (410) through a scroll.

12. A digital broadcast receiver (200) for allowing EPG information to be displayed on a screen (400), comprising:
a first unit to display a mini-map (410) on a portion of the screen of the digital broadcast receiver;
a second unit to select a specific item belonging to a specific category; and
a third unit to display a result filtered by the selection on the mini-map (410),
wherein the mini-map (410) is displayed on a two-dimensional plane having channel and broadcast time axes.

13. The digital broadcast receiver as claimed in claim 12, further comprising a unit to select another program through a cursor movement on the mini-map (410).

14. The digital broadcast receiver as claimed in claim 12 or claim 13, wherein the specific category includes a category according to program genre.

15. The digital broadcast receiver as claimed in claim 14, wherein the specific category further includes categories according to program rate, image quality, and whether the program has been reserved or not.

16. The digital broadcast receiver as claimed in any one of claims 12-14, wherein cells (411-415) representative of the respective programs are displayed on the screen (400) such that the cells (411-415) have different colors for each item in a category according to genre.

17. The digital broadcast receiver as claimed in any one of claims 12-16, wherein a cell (411-415) representative of a program that has already been broadcast among the cells (411-415) representative of the programs has a separate color for indicating a past program.

18. The digital broadcast receiver as claimed in any one of claims 12-17, wherein a cell (411-415) corresponding to a currently broadcast program among the cells (411-415) representative of the respective programs is indicated in a predetermined pattern.

19. The digital broadcast receiver as claimed in any one of claims 12-18, wherein when all EPG information is not simultaneously displayed on the mini-map (410), all the EPG information can be utilized on the mini-map (410) through a scroll.

20. A method of displaying broadcasting information on a screen (400), comprising:
displaying a mini-map (410) on a portion of the screen (400) of a broadcast receiver;
selecting a specific item belonging to a specific category; and
displaying a result of the selection on the mini-map (410).

21. The method as claimed in claim 20, wherein the mini-map (410) comprises cells (411-415) representative of the respective programs.
